# EUROPÄISCHE PATENTSCHRIFT

(11) **EP 2 613 988 B1**
(45) Veröffentlichungstag und Bekanntmachung des Hinweises auf die Patenterteilung: **13.03.2019**
(21) Anmeldenummer: 11731373.4
(22) Anmeldetag: 14.07.2011
(51) Int. Cl.: B60T 13/58, B60T 13/74, B60T 17/22

(54) **VERFAHREN ZUM FESTSTELLEN EINER STÖRUNG IN EINER BETRIEBS- ODER FESTSTELLBREMSE IN EINEM FAHRZEUG, REGEL- BZW. STEUERGERÄT ZUR DURCHFÜHRUNG DES VERFAHRENS UND FESTSTELLBREMSE MIT SO EINEM REGEL- BZW. STEUERGERÄT**
FAILURE DETECTION METHOD IN A VEHICLE BRAKE, CONTROL UNIT TO PERFORM THE METHOD AND PARKING BRAKE WITH SUCH A CONTROL UNIT
PROCEDE DE DETECTION D'UN FAUTE DANS UN FREINAGE D'UN VEHICULE, UNITÉ DE COMMANDE CORRESPONDANT, ET FREIN DE STATIONNEMENT AVEC UN TEL UNITÉ DE COMMANDE

(30) Priorität: 10.09.2010 DE 102010040573
(43) Veröffentlichungstag der Anmeldung: 17.07.2013
(73) Patentinhaber: Robert Bosch GmbH, 70442 Stuttgart (DE)
(72) Erfinder: BAEHRLE-MILLER, Frank, 71101 Schoenaich (DE); BLATTERT, Dieter, 74366 Kirchheim/Neckar (DE); PUTZER, Tobias, 74177 Bad Friedrichshall (DE)
(86) Internationale Anmeldenummer: PCT/EP2011/062032
(87) Internationale Veröffentlichungsnummer: WO 2012/031803

(56) Entgegenhaltungen:
- DE-A1-102009 027 479
- JP-A- 9 109 876
- JP-A- 11 043 038

## Beschreibung

Die Erfindung bezieht sich auf ein Verfahren zum Feststellen einer Störung in einer Betriebs- oder Feststellbremse in einem Fahrzeug.

### Stand der Technik

Aus dem Stand der Technik sind Feststell- bzw. Parkbremsen bekannt, welche dazu dienen, Fahrzeuge im Stillstand durch Erzeugen einer Klemmkraft dauerhaft festzusetzen. Feststellbremsen können einen elektrischen Bremsmotor umfassen, der zur Erzeugung einer Klemmkraft unmittelbar auf die Bremskolben der hydraulischen Fahrzeugbremse wirkt. Der elektrische Bremsmotor ist so dimensioniert, dass eine Klemmkraft erzeugt werden kann, welche das Fahrzeug bis zu einer definierten Hangneigung sicher festsetzt. Zusätzlich zur elektromotorischen Klemmkraft kann auch über die hydraulische Fahrzeugbremse eine Klemmkraft erzeugt werden, beispielsweise bei Hangneigungen, die ein bestimmtes Maß überschreiten.

Voraussetzung für eine dauerhafte Funktionstüchtigkeit ohne Gefahr einer Bauteilschädigung ist es, dass die hydraulischen Radbremsen nicht thermisch überlastet sind, beispielsweise aufgrund intensiver Betätigung der Fahrzeugbremse während eines vorangegangenen Bremsvorganges. Wird im Fading-Fall bzw. bei Sieden der Bremsflüssigkeit die Feststellbremse angezogen, werden die thermisch hoch beanspruchten Bremsbeläge weiter komprimiert und können dadurch dauerhaft geschädigt werden. Des Weiteren besteht die Gefahr, dass die Bremsbeläge mit der Bremsscheibe verkleben, was beim anschließenden Losfahren des Fahrzeugs zu einer Zerstörung der Bremsbeläge führen kann. Wird eine heiße Bremsscheibe mechanisch hoch beansprucht, kann diese lokal begrenzt oder insgesamt Schaden nehmen.

Die JP 11043038 A und die JP 9109876 A beziehen sich auf hydraulische Fahrzeugbremsen. In diesen Druckschriften sind Elektromotoren genannt, die zum Antrieb der Hydraulikpumpen eingesetzt werden, über die der erforderliche hydraulische Bremsdruck bereitgestellt wird.

Die DE 10 2009 027 479 A1 offenbart eine Feststellbremse für ein Fahrzeug mit einem elektrischen Bremsmotor, der zusätzlich zu einer hydraulischen Bremsvorrichtung vorgesehen ist. Zum Feststellen des Fahrzeugs im Stillstand wird der elektrische Bremsmotor betätigt und auf diese Weise eine elektromotorische Klemmkraft generiert, wobei gegebenenfalls der hydraulische Bremsdruck ergänzend wirksam wird. Es wird die Stromaufnahme von zumindest zwei Aktuatoren im Bremssystem gemessen und untereinander verglichen. Ein Fehler liegt vor, wenn eine unzulässig hohe Abweichung zwischen den Stromwerten auftritt.

### Offenbarung der Erfindung

Der Erfindung liegt die Aufgabe zugrunde, Störungen in einer Betriebs- oder Feststellbremse in einem Fahrzeug, die sowohl eine elektromotorische als auch eine hydraulische Bremsvorrichtung umfasst, sicher zu erkennen.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren bezieht sich auf das Erkennen einer Störung in einer Betriebs- oder Feststellbremse in einem Fahrzeug, die sowohl eine elektromotorische Bremsvorrichtung mit einem elektrischen Bremsmotor als auch eine hydraulische Bremsvorrichtung umfasst, wobei zum Festsetzen des Fahrzeugs im Stillstand eine Klemmkraft in der Feststellbremse erzeugbar ist, die entweder vollständig von der elektromotorischen oder der hydraulischen Bremsvorrichtung oder anteilig von beiden Bremsvorrichtungen erzeugt wird. Der elektrische Bremsmotor wirkt insbesondere auf einen Bremskolben einer hydraulischen Radbremseinheit, welche Bestandteil der Fahrzeugbremse ist. Die hydraulische Bremsvorrichtung der Feststellbremse gehört zur Fahrzeugbremse, über die das Fahrzeug im normalen Fahrbetrieb abgebremst wird.

Um mögliche Störungen in der hydraulischen Bremsvorrichtung erkennen zu können, welche die Gefahr einer Bauteilschädigung der Komponenten der Feststellbremse bzw. der hydraulischen Bremsvorrichtung bergen, wird während der Betätigung der Feststellbremse mindestens eine motorische Kenngröße des elektrischen Bremsmotors auf Überschreiten eines zulässigen Wertebereichs untersucht. Liegt die betrachtete motorische Kenngröße außerhalb des zulässigen Wertebereichs, muss von einem Fehler in der hydraulischen Bremsvorrichtung ausgegangen werden. In diesem Fall kann ein entsprechendes Fehlersignal generiert werden, das dem Fahrer zur Anzeige gebracht oder in sonstiger Weise weiterverarbeitet werden kann. Da die elektromotorische und hydraulische Bremsvorrichtung zusammenwirken, kann allein bei Untersuchung der elektromotorischen Kenngröße auf die Störung im hydraulischen System geschlossen werden.

Untersucht wird mindestens eine motorische Kenngröße des elektrischen Bremsmotors bzw. eine hiermit korrelierende Größe. Als elektromotorische Kenngröße kommt der Verlauf der Stromaufnahme des elektrischen Bremsmotors in Betracht. Bei einer ordnungsgemäß funktionierenden Feststellbremse verläuft der Strom des elektrischen Bremsmotors mit dem Erreichen der Ziel-Klemmkraft innerhalb einer definierten Schwankungsbreite zumindest annähernd konstant. Dagegen steigt der Strom im Falle einer Störung der hydraulischen Bremsvorrichtung aufgrund mangelnder hydraulischer Unterstützung weiter an, was durch Überschreiten eines Strom-Schwellenwertes festgestellt werden kann.

Als motorische Kenngröße bzw. damit korrelierende Größe kann auch die Drehzahl des elektrischen Bremsmotors untersucht werden, die im Normalfall bei Erreichen der Ziel-Klemmkraft innerhalb einer zulässigen Schwankungsbreite einen konstanten Wert einnimmt, im Fall eines Schadens der hydraulischen Bremsvorrichtung dagegen weiter absinkt, was durch ein Unterschreiten eines Drehzahl-Schwellenwertes erkannt werden kann.

Des Weiteren ist es zusätzlich oder alternativ möglich, den zurückgelegten Weg des Bremskolbens zu untersuchen, welcher von dem elektrischen Bremsmotor beaufschlagt wird und der üblicherweise Bestandteil der hydraulischen Radbremse ist. Falls kein ausreichender Kolbenweg zur Verfügung steht, was durch Nichterreichen eines entsprechenden Schwellenwertes festgestellt werden kann, liegt ein Schaden im hydraulischen System vor. Die Kolbenvorschubgeschwindigkeit muss dagegen eine Mindestgeschwindigkeit aufweisen, andernfalls ist von einem Schaden auszugehen.

Grundsätzlich ist es ausreichend, lediglich eine elektromotorische Kenngröße bzw. damit korrelierende Größe zu untersuchen und daraus auf einen Schaden im hydraulischen System zu schließen. Es kann aber zweckmäßig sein, mehrere Größen zu untersuchen, beispielsweise, um die Gefahr eines Fehlers beim Erkennen einer Störung zu minimieren.

Die Untersuchung, ob ein Fehler bzw. eine Störung vorliegt, wird zweckmäßigerweise während der Betätigung der hydraulischen Bremsvorrichtung zum Erzeugen einer Klemmkraft durchgeführt. In diesem Fall besteht aufgrund des Einwirkens sowohl der elektromotorischen Bremsvorrichtung als auch der hydraulischen Bremsvorrichtung auf den gleichen Bremskolben eine signifikant feststellbare Beeinflussung der elektromotorischen Kenngrößen durch das hydraulische System. Störungen sind dadurch gut feststellbar.

Es kann zweckmäßig sein, zu Testzwecken die hydraulische Bremsvorrichtung zur Erzeugung einer hydraulischen Klemmkraft zu betätigen, sobald ein Verriegelungswunsch erkannt wird, auch wenn grundsätzlich das Erreichen einer Ziel-Klemmkraft in der Feststellbremse allein über den elektrischen Bremsmotor gewährleistet werden kann. Das Erzeugen einer hydraulischen Klemmkraft zu Testzwecken wird beispielsweise durchgeführt, falls eine Kenngröße der hydraulischen Bremsvorrichtung außerhalb eines zulässigen Wertebereiches liegt. In Betracht kommt zum Beispiel die Bremsscheibentemperatur oder die Bremsflüssigkeitstemperatur, die einen zugeordneten Schwellenwert überschreitet. Auch bei einem Fading der Radbremse, bei dem die Fahrzeugverzögerung nicht dem Fahrerbremswunsch entspricht, kann eine hydraulische Klemmkraft generiert werden. Das Fading wird aus einem vorangegangenen Bremsvorgang ermittelt.

Ungeachtet von einem Betätigen der hydraulischen Klemmkraft zu Testzwecken wird die hydraulische Bremsvorrichtung auch im regulären Betrieb der Feststellbremse betätigt, sofern eine entsprechende Auslösebedingung erfüllt ist. In Betracht kommt ein Abstellen des Fahrzeugs auf einer Hangneigung, die einen Schwellenwert von beispielsweise 20 % überschreitet. Allgemein wird eine hydraulische Klemmkraft zusätzlich erzeugt, sofern die elektromotorische Klemmkraft allein für das Erreichen der Ziel-Klemmkraft nicht ausreicht.

Nachdem die hydraulische Bremsvorrichtung zum Erzeugen einer hydraulischen Klemmkraft betätigt worden ist, kann wie vorbeschrieben über eine Auswertung einer elektromotorischen Kenngröße eine Störung im hydraulischen System festgestellt werden.

Falls eine Störung erkannt wird, wird ein Fehlersignal generiert, das auf verschiedene Weise verarbeitet werden kann. Bevorzugt wird die Störung dem Fahrer angezeigt, insbesondere auf optische, akustische und/oder haptische Weise, um ihn auf die Störung aufmerksam zu machen. Darüber hinaus bzw. alternativ ist es auch möglich, bei einer erkannten Störung wie zum Beispiel einer Überlastung die Feststellbremse zunächst dem Fahrerwunsch entsprechend zu verriegeln, jedoch nach erkannter Störung sofort wieder zu öffnen, um eine Bauteilschädigung zu vermeiden. Möglich ist es aber auch, die Verriegelung beizubehalten, jedoch den Fahrer aufzufordern, die Feststellbremse manuell zu lösen. Des Weiteren kann es zweckmäßig sein, nach dem Lösen die Feststellbremse entweder selbsttätig wieder zu betätigen, sobald ein kritischer Wert im hydraulischen System wieder in einen unkritischen Bereich gelangt bzw. dem Fahrer eine entsprechende Aufforderung zum Betätigen der Feststellbremse mitzuteilen.

Das erfindungsgemäße Verfahren läuft in einem Regel- bzw. Steuergerät ab, welches Bestandteil der Feststellbremse im Fahrzeug ist bzw. mit der Feststellbremse oder Komponenten der Feststellbremse kommuniziert. Das Regel- bzw. Steuergerät kann Bestandteil eines ESP-Steuergeräts (elektronisches Stabilitätsprogramm) sein oder eine Zusatzfunktion auf einem ESP-Steuergerät bilden.

Weitere Vorteile und zweckmäßige Ausführungen sind den weiteren Ansprüchen, der Figurenbeschreibung und den Zeichnungen zu entnehmen. Es zeigen:
- Fig. 1: ein Diagramm mit dem zeitabhängigen Verlauf elektromotorischer Kenngrößen sowie des hydraulischen Drucks in einer Feststellbremse bei einem ordnungsgemäßen Zustand der Feststellbremse,
- Fig. 2: ein Fig. 1 entsprechendes Schaubild, jedoch dargestellt für den Fall einer Störung im hydraulischen System,
- Fig. 3: ein Ablaufdiagramm zur Durchführung des Verfahrens zum Feststellen einer Störung in der Feststellbremse,
- Fig. 4: die Fortsetzung des Ablaufdiagramms gemäß Fig. 3.

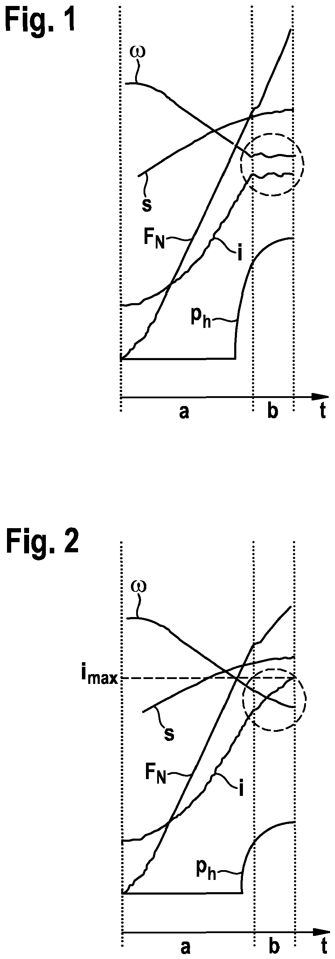

In den Fig. 1 und 2 ist zeitabhängig der Verlauf diverser Kenngrößen einer Feststellbremse in einem Fahrzeug dargestellt. Eingetragen sind der hydraulische Druck pₕ einer hydraulischen Bremsvorrichtung, der Strom i eines elektrischen Bremsmotors, die Motorgeschwindigkeit ω des Bremsmotors, der Stellweg s des Bremsmotors sowie die Gesamt-Klemmkraft F_{N}, welche sich aus einem Anteil des elektrischen Bremsmotors und einem Anteil der hydraulischen Bremsvorrichtung zusammensetzt. Dargestellt sind in Fig. 1 und 2 jeweils zwei zeitlich aufeinander folgende Phasen a und b, von denen die Phase a den ausschließlich elektromechanischen Kraftaufbau und die Phase b den elektrohydraulischen Kraftaufbau bis zum das Erreichen der Ziel-Klemmkraft F_{N} kennzeichnet.

Im regulären Fall gemäß Fig. 1 liegen mit dem Erreichen der Ziel-Klemmkraft in der Phase b der Stromverlauf i sowie die Motorgeschwindigkeit ω des elektrischen Bremsmotors auf einem annähernd konstanten Niveau innerhalb eines verhältnismäßig schmalen, zulässigen Wertebereichs. Im Falle einer Störung der hydraulischen Bremsvorrichtung gemäß Fig. 2 steigt dagegen der Stromverlauf i auch in der Phase b weiter an und erreicht ein Maximum iₘₐₓ, welches oberhalb eines zulässigen Strom-Schwellenwertes liegt. Die Motorgeschwindigkeit ω sinkt dagegen in der Phase b weiter ab und unterschreitet einen unteren, zulässigen Schwellenwert. Fig. 2 ist auch zu entnehmen, dass der Druckverlauf pₕ der hydraulischen Bremsvorrichtung sich in der Phase b auf einem niedrigeren Niveau als im regulären Fall gemäß Fig. 1 bewegt, das heißt die Druckgenerierung ist eingeschränkt.

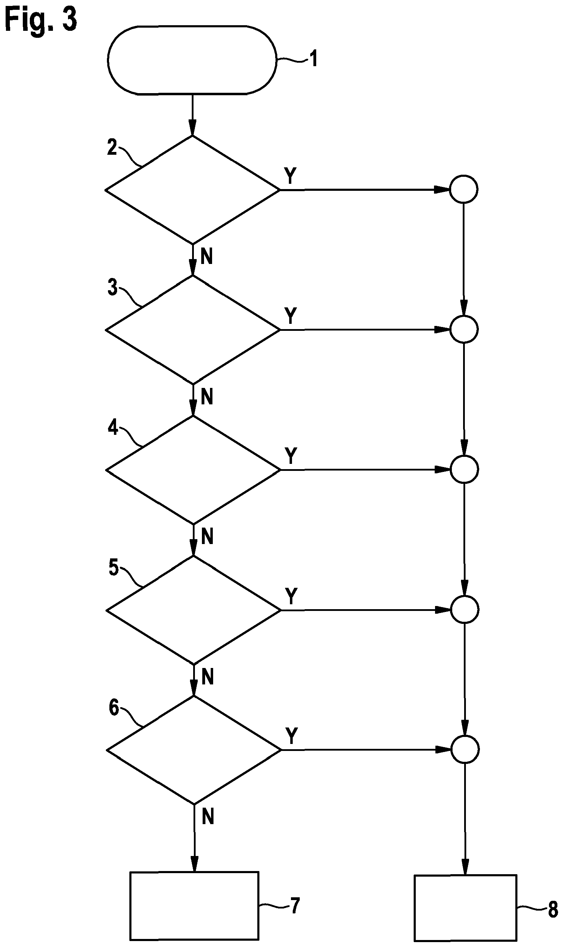

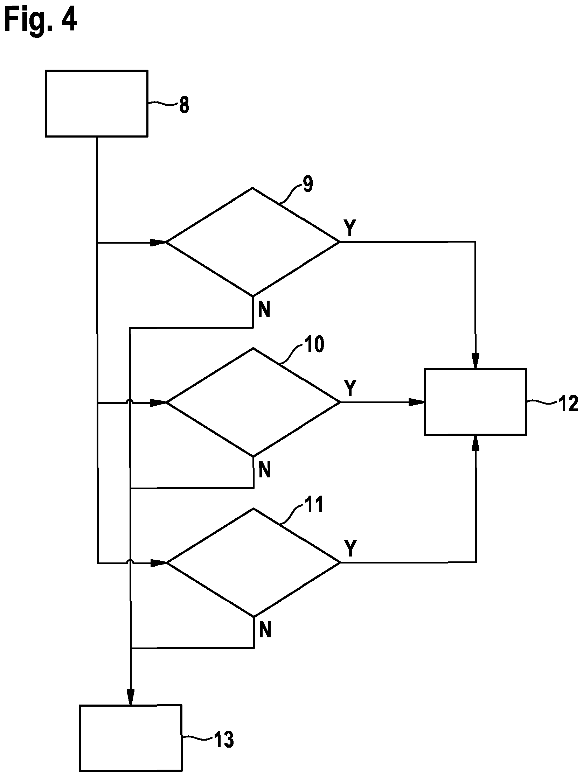

In den Fig. 3 und 4 ist ein Ablaufdiagramm zum Durchführen des Verfahrens dargestellt, über das eine Störung in einer Feststellbremse erkannt werden kann. Der Verfahrensschritt 1 repräsentiert den Verriegelungswunsch des Fahrers. In den folgenden Verfahrensschritten 2 bis 6 wird, nachdem der Wunsch des Fahrers zum Betätigen der Feststellbremse erkannt worden ist, jeweils eine Abfrage durchgeführt, ob in der Feststellbremse die hydraulische Bremsvorrichtung betätigt werden soll. Dies ist dann der Fall, wenn eine der Abfragen gemäß den Schritten 2 bis 6 zutrifft, so dass der Ja-Verzweigung ("Y") gefolgt und zum Verfahrensschritt 8 fortgefahren wird, in welchem die hydraulische Bremsvorrichtung betätigt und eine hydraulische Klemmkraft erzeugt wird. Andernfalls wird in den Abfragen 2 bis 6 jeweils der Nein-Verzweigung ("N") folgend bis zum Verfahrensschritt 7 fortgefahren, gemäß dem ausschließlich eine elektromotorische Klemmkraft durch Betätigen der elektromotorischen Bremsvorrichtung bereitgestellt wird. Sofern eine der Abfragen gemäß den Schritten 2 bis 6 zutrifft und zum Verfahrensschritt 8 verzweigt wird, wird zusätzlich zu der elektromotorischen Klemmkraft auch eine hydraulische Klemmkraft erzeugt.

Die Verfahrensschritte 2 und 3 stellen einen Standardfall dar, in welchem überprüft wird, ob die Hangneigung einen Schwellenwert überschreitet (Verfahrensschritt 2) bzw. die elektromotorische Klemmkraft nicht ausreicht, um eine Ziel-Klemmkraft zu erreichen (Verfahrensschritt 3). Sofern eine der Bedingungen erfüllt ist, wird der Ja-Verzweigung folgend zum Verfahrensschritt 8 fortgefahren und zusätzlich zu der elektromotorischen Klemmkraft auch eine hydraulische Klemmkraft generiert.

Die Verfahrensschritte 4 bis 6 repräsentieren eine Störung im System, die jedoch nicht zwingenderweise auf einen Schadensfall in der hydraulischen Bremsvorrichtung zurückzuführen ist. Gemäß Verfahrensschritt 4 wird abgefragt, ob ein Fading vorliegt, bei dem die Fahrzeugverzögerung aus einem vorangegangenen Bremsvorgang nicht dem Fahrerbremswunsch entsprochen hat. Sofern dies zutrifft, also der Fahrerbremswunsch nicht in gewünschter Weise umgesetzt werden konnte, wird der Ja-Verzweigung folgend zum Verfahrensschritt 8 fortgefahren.

Im Verfahrensschritt 5 erfolgt eine Abfrage, ob die Bremsscheibentemperatur einen zugeordneten Schwellenwert überschreitet. Auch in diesem Fall liegt eine Störung vor und es wird der Ja-Verzweigung folgend zum Schritt 8 fortgefahren.

Im Verfahrensschritt 6 erfolgt eine Abfrage, ob die Bremsflüssigkeitstemperatur einen zugeordneten Schwellenwert überschreitet. Ist dies der Fall, wird der Ja-Verzweigung folgend zum Verfahrensschritt 8 fortgefahren.

Fig. 4 stellt eine Fortsetzung des Verfahrens dar und beginnt mit dem Verfahrensschritt 8, gemäß dem eine hydraulische Bremskraft zusätzlich zur elektromotorischen Bremskraft bereitgestellt wird. Die Abfragen gemäß den Schritten 9 bis 11 dienen zur Überprüfung, ob eine Störung in der hydraulischen Bremsvorrichtung vorliegt. Dies wird anhand einer elektromotorischen Kenngröße abgefragt.

Gemäß Verfahrensschritt 9 wird überprüft, ob die Bremskolbenvorschubgeschwindigkeit unterhalb eines Schwellenwertes liegt. Ist dies der Fall, wird der Ja-Verzweigung folgend zum Verfahrensschritt 12 fortgefahren, in welchem ein Fehlersignal generiert wird. Andernfalls wird der Nein-Verzweigung folgend zum Verfahrensschritt 13 fortgefahren; es liegt zumindest aus der Abfrage gemäß Verfahrensschritt 9 keine erkennbare Störung der hydraulischen Bremsvorrichtung vor, so dass die Verriegelungsfunktion in der Feststellbremse ordnungsgemäß durchgeführt werden kann.

Im Verfahrensschritt 10, welcher ebenso wie der Verfahrensschritt 11 zusätzlich bzw. parallel zur Abfrage gemäß Verfahrensschritt 9 durchgeführt wird, erfolgt eine Abfrage, ob der Stromverlauf i des elektrischen Bremsmotors einen Schwellenwert überschreitet. Ist dies der Fall, liegt eine Störung vor und es wird zum Verfahrensschritt 12 fortgefahren, andernfalls zum Verfahrensschritt 13.

Im Verfahrensschritt 11 wird abgefragt, ob der zur Verfügung stehende Weg des Bremskolbens nicht ausreicht. Ist dies der Fall, liegt ebenfalls eine Störung vor und es wird der Ja-Verzweigung folgend zum Verfahrensschritt 12 fortgefahren, andernfalls zum Verfahrensschritt 13.

Im Verfahrensschritt 12 wird ein Fehlersignal generiert, welches dem Fahrer zur Anzeige gebracht wird. Zusätzlich kann selbsttätig in die Feststellbremse eingegriffen werden, beispielsweise dergestalt, dass die bereits verriegelte Feststellbremse nach dem Erkennen der Störung selbsttätig wieder gelöst wird.

## Patentansprüche

1. Verfahren zum Feststellen einer Störung in einer Betriebs- oder Feststellbremse, die eine elektromotorische Bremsvorrichtung, welche einen elektrischen Bremsmotor umfasst, und eine hydraulische Bremsvorrichtung zur Erzeugung einer Klemmkraft (F_{N}) aufweist, wobei ein Fehler in der hydraulischen Bremsvorrichtung erkannt wird, falls bei Erzeugung einer hydraulischen Klemmkraft zusätzlich zu der elektromotorischen Klemmkraft eine motorische Kenngröße des elektrischen Bremsmotors bzw. eine damit korrelierende Größe außerhalb eines zulässigen Wertebereichs liegt.

2. Verfahren nach Anspruch 1, **dadurch gekennzeichnet, dass** als motorische Kenngröße des elektrischen Bremsmotors der Stromverlauf untersucht wird.

3. Verfahren nach Anspruch 1 oder 2, **dadurch gekennzeichnet, dass** als motorische Kenngröße des elektrischen Bremsmotors die Drehzahl untersucht wird.

4. Verfahren nach einem der Ansprüche 1 bis 3, **dadurch gekennzeichnet, dass** der zurückgelegte Weg eines Bremskolbens untersucht wird, welcher von dem elektrischen Bremsmotor beaufschlagt wird.

5. Verfahren nach einem der Ansprüche 1 bis 4, **dadurch gekennzeichnet, dass** die Vorschubgeschwindigkeit des Bremskolbens untersucht wird.

6. Verfahren nach einem der Ansprüche 1 bis 5, **dadurch gekennzeichnet, dass** die Untersuchung, ob eine Störung vorliegt, während der Betätigung der hydraulischen Bremsvorrichtung durchgeführt wird.

7. Verfahren nach Anspruch 6, **dadurch gekennzeichnet, dass** die Betätigung der hydraulischen Bremsvorrichtung ausgelöst wird, falls eine Kenngröße der hydraulischen Bremsvorrichtung außerhalb eines zulässigen Wertebereichs liegt.

8. Verfahren nach Anspruch 6 oder 7, **dadurch gekennzeichnet, dass** die Betätigung der hydraulischen Bremsvorrichtung ausgelöst wird, falls die Fahrzeugverzögerung aus einem vorangegangenen Bremsvorgang nicht dem Fahrerbremswunsch entsprach.

9. Verfahren nach einem der Ansprüche 6 bis 8, **dadurch gekennzeichnet, dass** die Betätigung der hydraulischen Bremsvorrichtung ausgelöst wird, falls die Ziel-Klemmkraft (F_{N,Ziel}) in der Feststellbremse nicht ausschließlich über die elektrische Bremsvorrichtung bereitgestellt werden kann.

10. Verfahren nach einem der Ansprüche 1 bis 9, **dadurch gekennzeichnet, dass** nach einer festgestellten Störung die Feststellbremse selbsttätig entriegelt wird.

11. Verfahren nach einem der Ansprüche 1 bis 9, **dadurch gekennzeichnet, dass** nach einer festgestellten Störung die Verriegelung der Feststellbremse beibehalten wird, jedoch der Fahrer eine Aufforderung zur Entriegelung erhält.

12. Regel- bzw. Steuergerät worin das Verfahren nach einem der Ansprüche 1 bis 11 durchgeführt wird.

13. Feststellbremse in einem Fahrzeug mit einem Regel- bzw. Steuergerät nach Anspruch 12.

## Claims

1. Method for identifying a failure in a service or parking brake which has an electromotive brake apparatus which comprises an electric brake motor and a hydraulic brake apparatus for generating a clamping force (F_{N}), wherein a fault in the hydraulic brake apparatus is detected if, during generation of a hydraulic clamping force in addition to the electromotive clamping force, a motor characteristic variable of the electric brake motor, or a variable correlating therewith, lies outside an admissible value range.

2. Method according to Claim 1, **characterized in that**, as motor characteristic variable of the electric brake motor, the electrical current profile is inspected.

3. Method according to Claim 1 or 2, **characterized in that**, as motor characteristic variable of the electric brake motor, the rotational speed is inspected.

4. Method according to any of Claims 1 to 3, **characterized in that** the distance travelled by a brake piston which is acted on by the electric brake motor is inspected.

5. Method according to any of Claims 1 to 4, **characterized in that** the advancing speed of the brake piston is inspected.

6. Method according to any of Claims 1 to 5, **characterized in that** the inspection as regards whether a failure is present is performed during the actuation of the hydraulic brake apparatus.

7. Method according to Claim 6, **characterized in that** the actuation of the hydraulic brake apparatus is initiated if a characteristic variable of the hydraulic brake apparatus lies outside an admissible value range.

8. Method according to Claim 6 or 7, **characterized in that** the actuation of the hydraulic brake apparatus is initiated if the vehicle deceleration from a preceding braking process did not correspond to the driver braking demand.

9. Method according to any of Claims 6 to 8, **characterized in that** the actuation of the hydraulic brake apparatus is initiated if the target clamping force (F_{N,Ziel}) in the parking brake cannot be provided by means of the electric brake apparatus alone.

10. Method according to any of Claims 1 to 9, **characterized in that**, after a failure being identified, the parking brake is automatically unlocked.

11. Method according to any of Claims 1 to 9, **characterized in that**, after a failure being identified, the locking of the parking brake is maintained, but a command for unlocking is output to the driver.

12. Closed-loop and/or open-loop control unit in which the method according to any of Claims 1 to 11 is performed.

13. Parking brake in a vehicle having a closed-loop and/or open-loop control unit according to Claim 12.

## Revendications

1. Procédé de détection d'un défaut dans un frein de service ou de stationnement comportant un dispositif de freinage par moteur électrique, qui comprend un moteur électrique de freinage et un dispositif de freinage hydraulique destiné à générer une force de serrage (F_{N}), dans lequel une défaillance affectant le dispositif de freinage hydraulique est détectée dans le cas où, lorsqu'une force de serrage hydraulique est générée en plus de la force de serrage produite par moteur électrique, une grandeur caractéristique de moteur concernant le moteur électrique de freinage ou une grandeur corrélée avec celle-ci se situe en dehors d'une plage de valeurs admissible.

2. Procédé selon la revendication 1, **caractérisé en ce que** la courbe de courant est analysée en tant que grandeur caractéristique de moteur concernant le moteur électrique de freinage.

3. Procédé selon la revendication 1 ou 2, **caractérisé en ce que** la vitesse de rotation est analysée en tant que grandeur caractéristique de moteur concernant le moteur électrique de freinage.

4. Procédé selon l'une quelconque des revendications 1 à 3, **caractérisé en ce que** la course d'un piston de frein sur lequel agit le moteur électrique de freinage est analysée.

5. Procédé selon l'une quelconque des revendications 1 à 4, **caractérisé en ce que** l'avance du piston de frein est analysée.

6. Procédé selon l'une quelconque des revendications 1 à 5, **caractérisé en ce que** l'analyse de la présence ou non d'un défaut est effectuée pendant le fonctionnement du dispositif de freinage hydraulique.

7. Procédé selon la revendication 6, **caractérisé en ce que** l'actionnement du dispositif de freinage hydraulique est déclenché dans le cas où une grandeur caractéristique du dispositif de freinage hydraulique se situe en dehors d'une plage de valeurs admissible.

8. Procédé selon la revendication 6 ou 7, **caractérisé en ce que** le dispositif de freinage hydraulique est déclenché dans le cas où la décélération du véhicule résultant d'un processus de freinage précédent ne correspondait pas au freinage souhaité par le conducteur.

9. Procédé selon l'une quelconque des revendications 6 à 8, **caractérisé en ce que** l'actionnement du dispositif de freinage hydraulique est déclenché dans le cas où la force de serrage cible (F_{N, cible}) exercée dans le frein de stationnement ne peut être fournie exclusivement par le dispositif de freinage électrique.

10. Procédé selon l'une quelconque des revendications 1 à 9, **caractérisée en ce que** le frein de stationnement est automatiquement desserré après détection d'une défaillance.

11. Procédé selon l'une quelconque des revendications 1 à 9, **caractérisé en ce qu'**après qu'un défaut a été détecté, le verrouillage du frein de stationnement est maintenu mais le conducteur est invité à le déverrouiller.

12. Appareil de régulation ou de commande, dans lequel le procédé est mis en oeuvre selon l'une quelconque des revendications 1 à 11.

13. Frein de stationnement dans un véhicule équipé d'un appareil de de régulation ou de commande selon la revendication 12.
